(19) **Europäisches Patentamt / European Patent Office / Office européen des brevets**

(11) **EP 1 876 068 A1**

(12) **EUROPEAN PATENT APPLICATION**
published in accordance with Art. 153(4) EPC

(43) Date of publication:
**09.01.2008 Bulletin 2008/02**

(21) Application number: **06732223.0**

(22) Date of filing: **21.04.2006**

(51) Int Cl.:
*B60R 21/01* (2006.01)  *B60R 21/13* (2006.01)
*B60R 21/16* (2006.01)  *B60R 22/46* (2006.01)

(86) International application number:
**PCT/JP2006/308465**

(87) International publication number:
**WO 2006/118061 (09.11.2006 Gazette 2006/45)**

(84) Designated Contracting States:
**DE FR GB**

(30) Priority: **27.04.2005 JP 2005129981**

(71) Applicant: **TOYOTA JIDOSHA KABUSHIKI KAISHA**
**Toyota-shi,**
**Aichi-ken, 471-8571 (JP)**

(72) Inventor: **FUJISHIMA, Hiromichi**
**TOYOTA JIDOSHA KK**
**Aichi 4718571 (JP)**

(74) Representative: **Winter, Brandl, Fürniss, Hübner Röss, Kaiser,**
**Polte Partnerschaft Patent- und Rechtsanwaltskanzlei**
**Bavariaring 10**
**80336 München (DE)**

(54) **ROLLOVER DETERMINATION DEVICE**

(57)    A disclosed rollover determination apparatus (101) mounted on a vehicle for determining whether or not the present vehicle has a possibility of rolling over is configured to change its rollover determination criterion when a vehicle behaviour control for controlling rotations of wheels is activated, so that it is not determined that the rollover occurs unless variation of the vehicle behaviour larger than that under the circumstance where the vehicle behaviour control is not activated occurs.

FIG.3

**Description**

BACKGROUND OF THE INVENTION

1. Field of the Invention

The present invention relates to a rollover determination apparatus mounted on a vehicle for determining whether or not the vehicle has a possibility of rolling over, and more particularly to a rollover determination apparatus mounted on a vehicle equipped with a vehicle behaviour control system for preventing inappropriate determinations of occurrence of rollover.

2. Description of the Related Art

Conventionally a rollover determination apparatus mounted on a vehicle for determining whether or not the vehicle has a possibility of rolling over is already known. See, for example, JP9-240399A, JP2000-009599A, JP2001-260786A, JP2002-200951A, and JP2005-041258A.

Such a rollover determination apparatus is used, for example, to determine a timing to develop curtain airbags in an airbag system.

Furthermore, the conventional rollover determination apparatus usually uses roll rate (angular speed of roll), which is a temporal derivative of roll angle, rather than the roll angle itself, as a parameter representing rolling condition of the vehicle since it would be likely too late for protection of passengers to develop the airbag after the vehicle actually begins to roll.

Various techniques have been proposed how a rollover determination criterion for the roll rate is set.

For example, in JP9-240399A it is proposed to determine that the rollover occurs when both the roll angle and the roll rate exceed the respective thresholds set for the roll angle and the roll rate, respectively.

In JP2000-009599A it is proposed to determine whether or not the present vehicle is turning based on a steering angle, and then to determine whether or not the rollover occurs, based on the roll angle and the roll rate when the present vehicle is not turning, while based on the roll angle, the roll rate, and lateral acceleration (lateral G-force) when the vehicle is turning.

In JP2001-260786A it is proposed to change the rollover determination criterion based on external force acting on a center of gravity of the vehicle.

In JP2002-200951A it is proposed to identify types of rollover based on the roll rate and the lateral G-force and then to change the rollover determination criterion based on the type of rollover.

In JP2005-041258A it is proposed to change the rollover determination criterion based on the presence of backlash.

However, the conventional rollover determination apparatuses such as ones disclosed in JP9-240399A, JP2000-009599A, JP2001-260786A, JP2002-200951A, and JP2005-041258A may produce an inappropriate determination of occurrence of rollover when mounted on a vehicle equipped with a vehicle behaviour control system known as, for example, VSC (Registered Trademark).

The vehicle behaviour control system starts to act in its nature earlier than an occupant protection apparatus such as an airbag system. The vehicle behaviour control system restricts side-skidding of the vehicle by, for example, independently controlling the respective braking force acting on each wheel based on data output from sensors such as yaw rate sensors, steering angle sensors, and lateral acceleration sensors. Such side-skidding may occur when, for example, a sharp turning is made while the vehicle is traveling for obstacle avoidance and the like, or the vehicle goes into a curve of which road surface is slippery,

Accordingly, when the vehicle equipped with the vehicle behaviour control system is likely to roll over by, for example, entering in a spin mode, the vehicle behaviour control system is activated and the occurrence of rollover is restricted.

However, even though the occurrence of rollover is immediately restricted by the vehicle behaviour control system when the vehicle equipped with the vehicle behaviour control system is likely to roll over, it is often that the roll rate in a direction to occur the rollover is at least once detected.

When the roll rate is once detected in such a way, the conventional rollover determination apparatus may undesirably determine that the rollover occurs even though it is highly likely that the occurrence of rollover will be actually restricted by the vehicle behaviour control system activated. This means that the curtain airbag may be developed even though the rollover does not occur.

If the curtain airbag is developed under the circumstance where the vehicle is not rolling over, it surprises the passengers with sounds and vibrations as well as takes a good mount of time and money for repairs by an expert at a dealer or the like to pack and load the curtain airbag again (i.e. to restore it to a stand-by condition where it is prepared to develop).

As described above, the airbag system in conjunction with the conventional rollover determination apparatus is categorized as an apparatus which protects the passengers after the rollover occurs and is considered to be independent from the vehicle behaviour control system which restricts the occurrence of rollover. Accordingly, when the conventional rollover determination apparatus is mounted on the vehicle equipped with the vehicle behaviour control system, these apparatus and system do not act in harmony but act independently so that the curtain airbag may be developed under the circumstance where the occurrence of rollover is restricted, as described above.

SUMMARY OF THE INVENTION

To solve the above-mentioned problems, it is a main object of this invention to provide a novel rollover determination apparatus for preventing inappropriate determinations of the occurrence of rollover on the vehicle equipped with the vehicle behaviour control system.

A first aspect of this invention to achieve the above object is a rollover determination apparatus configured to change its rollover determination criterion when a vehicle behaviour control for controlling rotations of wheels is activated.

In the context of this aspect, the rollover determination criterion may be, for example, thresholds for parameters representing rolling condition of the vehicle such as roll rates.

It is considered that in cases where the vehicle behaviour is controlled so that the occurrence of rollover is restricted, the probability to occur the rollover is reduced. Accordingly, the rollover determination apparatus of the first aspect is, more particularly, configured to change its rollover determination criterion when the vehicle behaviour control is activated, so that it is not determined that the rollover occurs unless variation of the vehicle behaviour larger than that under the circumstance where the vehicle behaviour control is not activated occurs.

In this context, the amount of said variation of the vehicle behaviour may be determined based on, for example, the amount of roll rate detected by a roll rate sensor. Such a roll rate sensor may be located, for example, near a center of gravity of the vehicle. More particularly, the amount of said variation of the vehicle behaviour may be determined, for example, a) based on the amount of roll rate detected by a first roll rate sensor and on the amount of roll rate detected by a second roll rate sensor, or b) based on the amount of roll rate detected by a roll rate sensor and on the amount of lateral acceleration detected by a lateral acceleration sensor. The reason that two sensors are provided is to make possible to determine the amount of variation of the vehicle behaviour even when one of the sensors fails.

Furthermore, in the first aspect, the vehicle behaviour control may be, for example, configured: to detect yaw rate of the present vehicle; to calculate yaw rate of the present vehicle based on a traveling speed of the present vehicle and on a steering angle; and to control rotations of wheels so that yaw rate of the present vehicle is reduced when the difference between the detected yaw rate and the calculated yaw rate exceeds a predetermined threshold.

According to the first aspect, in light of a consideration that the rollover is less likely to occur when the vehicle behaviour control is activated than when the vehicle behaviour control is not activated, it becomes hardly to determine that the rollover occurs while the vehicle behaviour control is activated so that the emergence of the circumstance where it is determined that the rollover occurs even though the rollover does not occur so that an occupant protection apparatus such as an airbag system is activated (in case of the curtain airbag, it is developed) is appropriately prevented.

By the way, the rollover determination apparatus of the first aspect is preferably configured to bring its rollover determination criterion back to the previous criterion when the vehicle behaviour control stops its operation.

The rollover determination apparatus of the first aspect may be used by, for example, A) a curtain airbag development apparatus which is mounted on the vehicle and is configured to develop curtain airbags when it is determined that the present vehicle has a possibility of rolling over, or B) an active roll bar apparatus which is mounted on a convertible vehicle and is configured to get up a retractable roll bar when it is determined that the present vehicle has a possibility of rolling over, in order to determine whether or not the present vehicle has a possibility of rolling over.

In case of the former A), to ensure a clearance between an inner side surface of a cabin and the head of occupant enough to develop the curtain airbag into such a clearance, it is preferable that the rollover determination apparatus is further configured to dynamically change its rollover determination criterion based on distance of movement of a head of occupant in a lateral direction of the vehicle. In this context, the amount of distance of movement of the head of occupant may be determined based on, for example, the amount of roll rate detected by a roll rate sensor, the amount of yaw rate sensor detected by a yaw rate sensor, and the amount of tension applied to a seatbelt.

A second aspect of this invention to achieve the above object is a rollover determination apparatus configured to change its rollover determination criterion when a seatbelt auto-retracting apparatus for applying pre-tension to a seatbelt is activated.

In the context of this aspect, the rollover determination criterion may be, for example, thresholds for parameters representing rolling condition of the vehicle such as roll rates.

It is considered that in cases where the vehicle behaviour is controlled so that the occurrence of rollover is restricted, the probability to occur the rollover is reduced. Accordingly, the rollover determination apparatus of the second aspect is, more particularly, configured to change its rollover determination criterion when the seatbelt auto-retracting apparatus is activated, so that it is not determined that the rollover occurs unless variation of the vehicle behaviour larger than that under the circumstance where the seatbelt auto-retracting apparatus is not activated occurs.

In this context, the amount of variation of the vehicle behaviour may be determined based on, for example, the amount of roll rate detected by a roll rate sensor. Such a roll rate sensor may be located, for example, near a center of gravity of the vehicle. More particularly, the amount of said variation of the vehicle behaviour may be determined, for example, a) based on the amount of roll rate detected by a first roll rate sensor and on the amount of roll rate detected by a second roll rate sensor, or b) based on the amount of roll rate detected by a roll rate sensor and on the amount of lateral acceleration detected by a lateral acceleration sensor. The reason that two sensors are provided is to make possible to determine the amount of variation of the vehicle behaviour even when one of the sensors fails.

Furthermore, in the second aspect, the seatbelt auto-retracting apparatus may be, for example, configured: to detect yaw rate of the present vehicle; to calculate yaw rate of the present vehicle based on a traveling speed of the present vehicle and on a steering angle; and to apply pre-tension to the seatbelt so that the occupant is restrained to a seat when the difference between the detected yaw rate and the calculated yaw rate exceeds a predetermined threshold.

According to the second aspect, in light of a consideration that the rollover is less likely to occur when the seatbelt auto-retracting apparatus is activated than when the seatbelt auto-retracting apparatus is not activated, it becomes hardly to determine that the rollover occurs while the vehicle behaviour control is activated so that the emergence of the circumstance where it is determined that the rollover occurs even though the rollover does not occur so that an occupant protection apparatus such as an airbag system is activated (in case of the curtain airbag, it is developed) is appropriately prevented.

By the way, the rollover determination apparatus of the second aspect is preferably configured to bring its rollover determination criterion back to the previous criterion when the seatbelt auto-retracting apparatus stops its operation.

The rollover determination apparatus of the second aspect may be used by, for example, A) a curtain airbag development apparatus which is mounted on the vehicle and is configured to develop curtain airbags when it is determined that the present vehicle has a possibility of rolling over, or B) an active roll bar apparatus which is mounted on a convertible vehicle and is configured to get up a retractable roll bar when it is determined that the present vehicle has a possibility of rolling over, in order to determine whether or not the present vehicle has a possibility of rolling over.

In case of the former A), to ensure a clearance between an inner side surface of a cabin and the head of occupant enough to develop the curtain airbag into such a clearance, it is preferable that the rollover determination apparatus is further configured to dynamically change its rollover determination criterion based on distance of movement of a head of occupant in a lateral direction of the vehicle. In this context, the amount of said distance of movement of the head of occupant may be determined based on, for example, the amount of roll rate detected by a roll rate sensor, the amount of yaw rate sensor detected by a yaw rate sensor, and the amount of tension applied to a seatbelt.

BRIEF DESCRIPTION OF THE DRAWINGS

These and other objects, features, and advantages of the present invention will become more apparent upon reading the following detailed description with reference to the accompanying drawings, in which:

Fig.1 is a schematic block view showing a hardware structure of a rollover determination apparatus according to an embodiment of this invention;
Fig.2 is a view illustrating an example of a rollover determination map according to an embodiment of this invention; and
Fig.3 is a view illustrating an example of a rollover determination map according to another embodiment of this invention.

DETAILED DESCRIPTION OF THE PREFERRED EMBODIMENTS

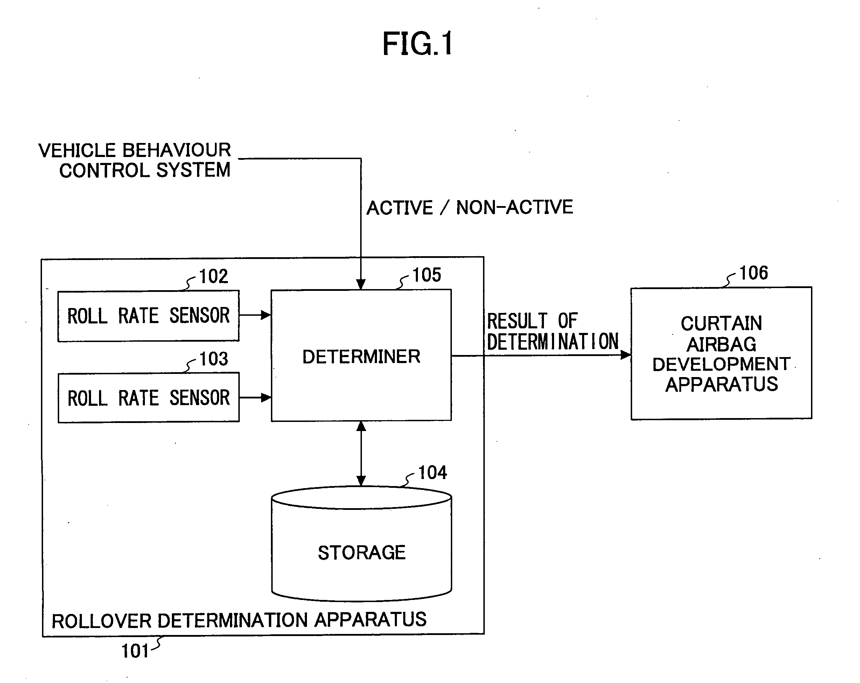

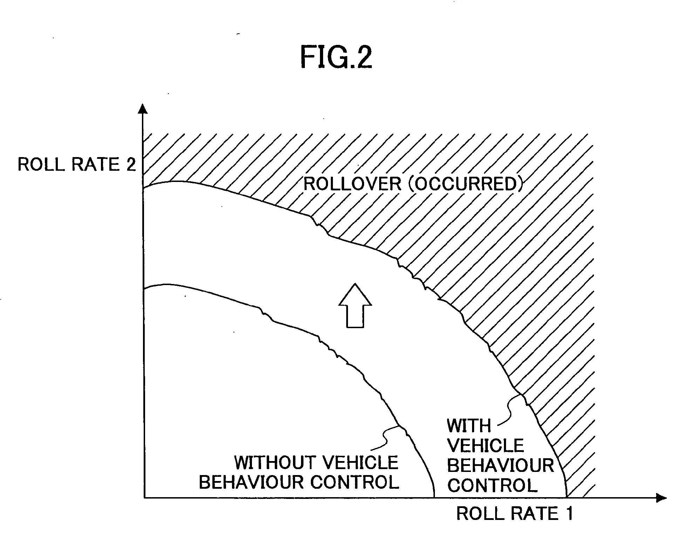

A rollover determination apparatus according to an embodiment of the present invention is now described with reference to Figs.1 and 2. In this embodiment, it is assumed that the rollover determination apparatus according to this embodiment acts in conjunction with the airbag system, particularly with the curtain airbag, and that the curtain airbag is designed and set to be developed when the rollover determination apparatus of this embodiment determines that the rollover occurs.

In addition, it is also assumed that the rollover determination apparatus according to this embodiment is mounted on the vehicle equipped with the vehicle behaviour control system. In this context, controlling of the vehicle behaviour is made by detecting the yaw rate of the present vehicle, calculating the yaw rate of the present vehicle based on a traveling speed and the steering angle of the present vehicle, and controlling rotations of the wheels so that the yaw rate is reduced when the difference between the detected yaw rate and the calculated yaw rate exceeds a predetermined threshold.

Fig.1 is a schematic block view showing a hardware structure of a rollover determination apparatus 101 according to this embodiment.

The rollover determination apparatus 101 includes first and second roll rate (roll angular speed) sensors 102, 103. In this embodiment, both the first and second roll rate sensors 102, 103 are located near a center of gravity of the present vehicle. The reason that two roll rate sensors are provided is to make possible to determine whether or not the rollover occurs even when one of the roll rate sensors fails. The specific configuration and principles of detection of the roll rate sensors are not described in detail in this description because such matters are already known to persons skilled in the art.

The rollover determination apparatus 101 also includes a storage 104 for pre-storing and holding a rollover determination map. The storage 104 may be any type of memory medium.

The rollover determination apparatus 101 also includes a determiner 105 for determining whether or not the rollover occurs by applying roll rates detected by the roll rate sensors 102, 103 to the rollover determination map stored in the storage 104.

In this embodiment, the determiner 105 is informed of whether the vehicle behaviour control system is active or non-active. The result of determination is transmitted from the determiner 105 to a curtain airbag development apparatus 106. The curtain airbag developer 106 is designed and set to develop the curtain airbags when the determiner 105 determines that the rollover occurs.

An example of the rollover determination map stored in the storage 104 is shown in Fig.2. In this example, a determination criterion (threshold) is set for two roll rates detected by the roll rate sensors 102, 103. When a plot of the detected roll rate values is located above a graph line of Fig.2, the determiner 105 determines that the rollover occurs.

As shown, two rollover determination threshold lines are set in this embodiment. A lower line represents a determination criterion for the circumstance where the vehicle behaviour control is not activated, while an upper line represents a determination criterion for the circumstance where the vehicle behaviour control is activated.

In other words, the determiner 105 uses the lower determination criterion when the vehicle behaviour control system is not activated, while the determiner 105 uses the upper determination criterion when the vehicle behaviour control system is activated. The vehicle behaviour control system is not activated when the vehicle is likely to roll over due to reasons except for the spin mode, such as overturn due to offset-colliding head-on, overturn due to being collided on a side face, or overturn due to dropping from steps, while the vehicle behaviour control system is activated when the vehicle is likely to roll over due to entering in the spin mode.

As already described, while the vehicle behaviour control system is active, it is not desirable to determine that the rollover occurs and to develop the curtain airbags when relatively small roll rate is detected in the early stage, since the vehicle behaviour control system makes the vehicle behaviour stable so that it becomes highly unlikely that the vehicle rolls over.

In this embodiment, the determiner 105 changes its rollover determination criterion from the lower criterion to the upper criterion when the determiner 105 is informed that the vehicle behaviour control system is activated. In this embodiment, the upper criterion for the circumstance where the vehicle behaviour control system is activated is set high enough that it is rarely determined that the rollover occurs.

In light of the high performance for stabilizing the vehicle behaviour of today's vehicle behaviour control system, it may be possible in theory to set no rollover determination criterion and to determine that the rollover does not occur, all the while the vehicle behaviour control is activated. However, it is considered preferable to provide the rollover determination criterion for the circumstance where the vehicle behaviour control system is active so that it is determined that the rollover occurs only when a very high roll rate occurs, as in this embodiment.

After the vehicle behaviour control system is activated, when the vehicle behaviour control system stops its operation since the vehicle behaviour becomes stable, the determiner 105 brings the rollover determination criterion back to the lower one.

Thus, according to this embodiment, the emergence of the circumstance where the curtain airbags are unnecessarily developed when the occurrence of rollover is restricted by the activated vehicle behaviour control system is appropriately prevented.

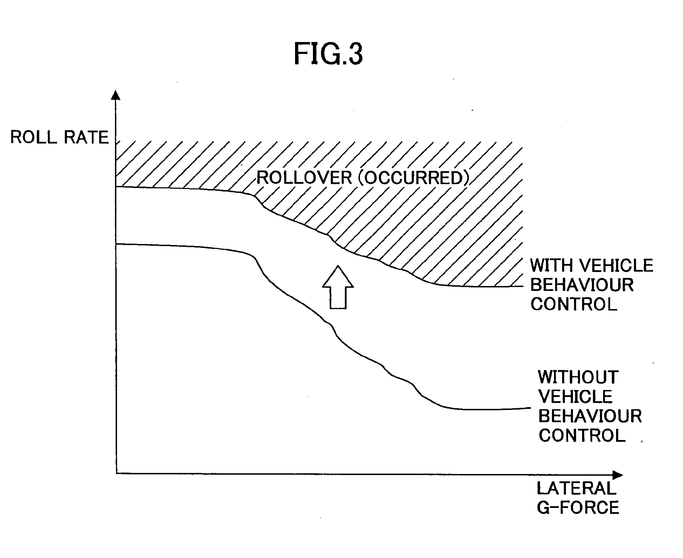

By the way, in the above embodiment, by way of example, an illustrative case is described where the rollover determination apparatus has two roll rate sensors and determines whether or not the rollover occurs based on the outputs from these two roll rate sensors. However, it can be understood by a person skilled in the art that the present invention is not limited to such an embodiment. For example, another case where the rollover determination apparatus has a roll rate sensor and a lateral G-force sensor and determines whether or not the rollover occurs based on two high and low determination criterions set on a map of the lateral G-force and the roll rate as shown in Fig.3 is also within the scope of the present invention.

In addition, considering distance of movement of a head of occupant in a lateral direction of the vehicle (i.e.

lateral shift length from a full-frontal direction), in a vehicle equipped with a seatbelt auto-retracting apparatus for applying pre-tension to the seatbelt in order to restrain the occupant to the seat, it is considered unnecessary to develop the curtain airbags until the roll rate exceeds a threshold when such a seatbelt auto-retracting apparatus is activated, which threshold is higher than a threshold for the circumstance where the seatbelt auto-retracting apparatus is not activated. Accordingly, in the above embodiment, the rollover determination criterion may be changed based on whether the seatbelt auto-retracting apparatus is active or non-active rather than whether the vehicle behaviour control system is active or non-active.

Furthermore, considering again the distance of movement of the head of occupant in the lateral direction of the vehicle, the curtain airbags cannot be developed after the distance between the head of occupant and an inner side surface of the cabin becomes less than a certain length. Consequently, it may be possible to linearly (dynamically) change the rollover determination criterion in order not to determine that the rollover occurs unless a larger variation of the vehicle behaviour occurs as the distance of movement of the head of occupant becomes smaller based on a necessary clearance to develop the curtain airbag and the distance of movement of the head of occupant. In this case, the lateral distance of movement of the head of occupant Dh is calculated as follows:

$$Dh = \int (K1 \cdot Rr + K2 \cdot Yr - K3 \cdot Bt) dt.$$

In this context, K1-K3 represent predetermined coefficients, respectively; Rr represents roll rate; Yr represents yaw rate; and Bt represents belt tension.

By the way, since both the rollover determination apparatus and the vehicle behaviour control system monitor the same or similar vehicle behaviors, it may be possible to mount the roll rate sensors and the yaw rate sensors on a single chip so that it acts as a common sensor system for both the apparatus and the system.

Furthermore, in the above description, an illustrative case is described where the developments of the curtain airbags are controlled based on the result of determination by the rollover determination apparatus. However, it can be understood that the present invention is not limited to such an embodiment. For example, another case where the rollover determination apparatus of the present invention is mounted on a convertible vehicle equipped with an active roll bar apparatus for getting up a retractable roll bar when the present vehicle has a possibility of rolling over, and retracting of the active roll bar is controlled by the rollover determination apparatus, is also within the scope of the present invention.

The present invention is applicable to any rollover determination apparatus mounted on the vehicle equipped with the vehicle behaviour control system. The present invention does not depend on visual design, weight, size, or performance of driving of the vehicle on which the rollover determination apparatus of the present invention is employed.

The contents of Japanese Patent Application No. JP2005-129981 filed on April 27, 2005 including the specification, drawings, and abstract are incorporated herein by reference in its entirety.

**Claims**

1. A rollover determination apparatus,
   **characterized in that**:

   said rollover determination apparatus (101) is configured to change its rollover determination criterion when a vehicle behaviour control for controlling rotations of wheels is activated.

2. The rollover determination apparatus as claimed in claim 1, **characterized in that**:

   said rollover determination apparatus (101) is configured to change its rollover determination criterion when the vehicle behaviour control is activated, so that it is not determined that the rollover occurs unless variation of the vehicle behaviour larger than that under the circumstance where the vehicle behaviour control is not activated occurs.

3. The rollover determination apparatus as claimed in claim 2, **characterized in that**:

   the amount of said variation of the vehicle behaviour is determined based on the amount of roll rate detected by a roll rate sensor.

4. The rollover determination apparatus as claimed in claim 4, **characterized in that**:

the amount of said variation of the vehicle behaviour is determined based on the amount of roll rate detected by a first roll rate sensor (102) and on the amount of roll rate detected by a second roll rate sensor (103).

5. The rollover determination apparatus as claimed in claim 3, **characterized in that**:

the amount of said variation of the vehicle behaviour is determined based on the amount of roll rate detected by a roll rate sensor and on the amount of lateral acceleration detected by a lateral acceleration sensor.

6. The rollover determination apparatus as claimed in claim 1, **characterized in that** said vehicle behaviour control is configured to:

detect yaw rate of the present vehicle;
calculate yaw rate of the present vehicle based on a traveling speed of the present vehicle and on a steering angle; and
control rotations of wheels so that yaw rate of the present vehicle is reduced when the difference between the detected yaw rate and the calculated yaw rate exceeds a predetermined threshold.

7. The rollover determination apparatus as claimed in claim 1, **characterized in that**:

said rollover determination apparatus (101) is configured to bring its rollover determination criterion back to the previous criterion when the vehicle behaviour control stops its operation.

8. The rollover determination apparatus as claimed in claim 1, **characterized in that**:

said rollover determination apparatus (101) is configured to be used by a curtain airbag development apparatus (106) in order to determine whether or not the present vehicle has a possibility of rolling over, the curtain airbag development apparatus being mounted on the vehicle and being configured to develop curtain airbags when it is determined that the present vehicle has a possibility of rolling over.

9. The rollover determination apparatus as claimed in claim 8, **characterized in that**:

said rollover determination apparatus (101) is further configured to dynamically change its rollover determination criterion based on distance of movement of a head of occupant in a lateral direction of the vehicle

10. The rollover determination apparatus as claimed in claim 9, **characterized in that**:

the amount of said distance of movement of the head of occupant is determined based on the amount of roll rate detected by a roll rate sensor, the amount of yaw rate sensor detected by a yaw rate sensor, and the amount of tension applied to a seatbelt.

11. The rollover determination apparatus as claimed in claim 1, **characterized in that**:

said rollover determination apparatus (101) is configured to be used by an active roll bar apparatus in order to determine whether or not the present vehicle has a possibility of rolling over, the active roll bar apparatus being mounted on a convertible vehicle and being configured to get up a retractable roll bar when it is determined that the present vehicle has a possibility of rolling over.

12. A rollover determination apparatus,
**characterized in that**:

said rollover determination apparatus (101) is configured to change its rollover determination criterion when a seatbelt auto-retracting apparatus for applying pre-tension to a seatbelt is activated.

13. The rollover determination apparatus as claimed in claim 12, **characterized in that**:

said rollover determination apparatus (101) is configured to change its rollover determination criterion when the seatbelt auto-retracting apparatus is activated, so that it is not determined that the rollover occurs unless variation of the vehicle behaviour larger than that under the circumstance where the seatbelt auto-retracting apparatus is not activated occurs.

**14.** The rollover determination apparatus as claimed in claim 13, **characterized in that**:

the amount of said variation of the vehicle behaviour is determined based on the amount of roll rate detected by a roll rate sensor.

**15.** The rollover determination apparatus as claimed in claim 14, **characterized in that**:

the amount of said variation of the vehicle behaviour is determined based on the amount of roll rate detected by a first roll rate sensor (102) and on the amount of roll rate detected by a second roll rate sensor (103).

**16.** The rollover determination apparatus as claimed in claim 14, **characterized in that**:

the amount of said variation of the vehicle behaviour is determined based on the amount of roll rate detected by a roll rate sensor and on the amount of lateral acceleration detected by a lateral acceleration sensor.

**17.** The rollover determination apparatus as claimed in claim 12, **characterized in that** said seatbelt auto-retracting apparatus is configured to:

detect yaw rate of the present vehicle;
calculate yaw rate of the present vehicle based on a traveling speed of the present vehicle and on a steering angle; and
apply pre-tension to the seatbelt so that the occupant is restrained to a seat when the difference between the detected yaw rate and the calculated yaw rate exceeds a predetermined threshold.

**18.** The rollover determination apparatus as claimed in claim 12, **characterized in that**:

said rollover determination apparatus (101) is configured to bring its rollover determination criterion back to the previous criterion when the seatbelt auto-retracting apparatus stops its operation.

**19.** The rollover determination apparatus as claimed in claim 12, **characterized in that**:

said rollover determination apparatus (101) is configured to be used by a curtain airbag development apparatus (106) in order to determine whether or not the present vehicle has a possibility of rolling over, the curtain airbag development apparatus being mounted on the vehicle and being configured to develop curtain airbags when it is determined that the present vehicle has a possibility of rolling over.

**20.** The rollover determination apparatus as claimed in claim 19, **characterized in that**:

said rollover determination apparatus (101) is further configured to dynamically change its rollover determination criterion based on distance of movement of a head of occupant in a lateral direction of the vehicle

**21.** The rollover determination apparatus as claimed in claim 20, **characterized in that**:

the amount of said distance of movement of the head of occupant is determined based on the amount of roll rate detected by a roll rate sensor, the amount of yaw rate sensor detected by a yaw rate sensor, and the amount of tension applied to a seatbelt.

**22.** The rollover determination apparatus as claimed in claim 12, **characterized in that**:

said rollover determination apparatus (101) is configured to be used by an active roll bar apparatus in order to determine whether or not the present vehicle has a possibility of rolling over, the active roll bar apparatus being mounted on a convertible vehicle and being configured to get up a retractable roll bar when it is determined that the present vehicle has a possibility of rolling over.

# FIG.1

VEHICLE BEHAVIOUR
CONTROL SYSTEM

ACTIVE / NON-ACTIVE

102
ROLL RATE SENSOR

103
ROLL RATE SENSOR

105
DETERMINER

RESULT OF
DETERMINATION

106
CURTAIN
AIRBAG
DEVELOPMENT
APPARATUS

104
STORAGE

ROLLOVER DETERMINATION APPARATUS

101

EP 1 876 068 A1

# FIG.2

# FIG.3

ROLL RATE

ROLLOVER (OCCURRED)

WITH VEHICLE BEHAVIOUR CONTROL

WITHOUT VEHICLE BEHAVIOUR CONTROL

LATERAL G-FORCE

## INTERNATIONAL SEARCH REPORT

| International application No. |
| --- |
| PCT/JP2006/308465 |

A. CLASSIFICATION OF SUBJECT MATTER
*B60R21/01*(2006.01), *B60R21/13*(2006.01), *B60R21/16*(2006.01), *B60R22/46*
(2006.01)

According to International Patent Classification (IPC) or to both national classification and IPC

B. FIELDS SEARCHED

Minimum documentation searched (classification system followed by classification symbols)
*B60R21/01*(2006.01), *B60R21/13*(2006.01), *B60R21/16*(2006.01), *B60R22/46*
(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2001-071787 A  (Honda Motor Co., Ltd.),<br>21 March, 2001 (21.03.01),<br>Par. Nos. [0024] to [0032]; Fig. 4<br>& US 6438463 B1 | 1-3,5-9,11<br>4,10,12-22 |
| Y | JP 2000-142360 A  (Mazda Motor Corp.),<br>23 May, 2000 (23.05.00),<br>Par. Nos. [0027] to [0028]; Fig. 1<br>(Family: none) | 1-3,5-9,11 |
| Y | JP 2002-200962 A  (Toyota Motor Corp.),<br>16 July, 2002 (16.07.02),<br>Par. Nos. [0057] to [0059]; Fig. 16<br>& US 2002/0087243 A1    & EP 1219501 A2 | 9 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>  04 July, 2006 (04.07.06) | Date of mailing of the international search report<br>  11 July, 2006 (11.07.06) |
| --- | --- |
| Name and mailing address of the ISA/<br>  Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/308465 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 07-164985 A  (Mitsubishi Motors Corp.),<br>27 June, 1995 (27.06.95),<br>Par. Nos. [0025] to [0028]; Fig. 1<br>(Family: none) | 11 |
| A | JP 2005-022522 A  (Toyota Motor Corp.),<br>27 January, 2005 (27.01.05),<br>Full text; all drawings<br>(Family: none) | 1-22 |
| A | JP 2004-262316 A  (Calsonic Kansei Corp.),<br>24 September, 2004 (24.09.04),<br>Full text; all drawings<br>(Family: none) | 1-22 |
| A | JP 2003-040062 A  (Nissan Motor Co., Ltd.),<br>13 February, 2003 (13.02.03),<br>Full text; all drawings<br>& US 2003/0019679 A1 | 1-22 |
| A | JP 2001-122081 A  (Takata Corp.),<br>08 May, 2001 (08.05.01),<br>Full text; all drawings<br>(Family: none) | 1-22 |
| A | JP 2000-190815 A  (Takata Corp.),<br>11 July, 2000 (11.07.00),<br>Full text; all drawings<br>& US 6374168 B1          & GB 2345032 A<br>& DE 99022608 U1 | 1-22 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9240399 A
- JP 2000009599 A
- JP 2001260786 A
- JP 2002200951 A
- JP 2005041258 A
- JP 2005129981 A